# EUROPEAN PATENT SPECIFICATION

(11) **EP 3 928 125 B1**
(45) Date of publication and mention of the grant of the patent: **22.04.2026**
(21) Application number: 19820651.8
(22) Date of filing: 22.08.2019
(51) Int. Cl.: G01S 17/89, G02B 26/10, G01S 7/481, G01S 17/06, G01S 17/42, G01S 17/93, G02B 26/08

(54) **SMALL BEARINGS FOR MULTI-ELEMENT OPTICAL SCANNING DEVICES, AND ASSOCIATED SYSTEMS AND METHODS**
KLEINE LAGER FÜR OPTISCHE MEHRELEMENTABTASTVORRICHTUNGEN UND ZUGEHÖRIGE SYSTEME UND VERFAHREN
PETITS PALIERS POUR DISPOSITIFS À BALAYAGE OPTIQUE À ÉLÉMENTS MULTIPLES, ET SYSTÈMES ET PROCÉDÉS ASSOCIÉS

(43) Date of publication of application: 29.12.2021
(73) Proprietor: SZ DJI Technology Co., Ltd., Shenzhen, Guangdong 518057 (CN)
(72) Inventor: WU, Jingyang, Shenzhen, Guangdong 518057 (CN); LU, Dong, Shenzhen, Guangdong 518057 (CN); WU, Yangyang, Shenzhen, Guangdong 518057 (CN); ZHANG, Zezheng, Shenzhen, Guangdong 518057 (CN)
(74) Representative: Appelt, Christian W.
(86) International application number: PCT/CN2019/102068
(87) International publication number: WO 2021/031206

(56) References cited:
- CN-A- 105 659 108
- CN-A- 108 351 413
- CN-A- 110 073 239
- US-A1- 2015 029 571
- US-A1- 2015 029 571
- US-A1- 2015 029 571
- US-A1- 2018 284 282
- US-A1- 2018 284 282
- US-A1- 2019 146 061

## Description

### TECHNICAL FIELD

The present technology is directed generally to small bearings for multi-element optical scanning devices, and associated systems and methods.

### BACKGROUND

Optical scanners have many applications including applications directed to autonomous driving. The environment of a mobile platform can typically be scanned or otherwise detected using one or more sensors such as LiDAR sensors which typically transmit a pulsed signal (e.g., laser signal) and detect reflections of the pulsed signal. Three-dimensional information about the environment can be determined in this way (e.g., at laser scanning points). While existing LiDAR sensors are typically suitable for their intended purpose, there is a continual user-driven demand for more compact, lightweight, long-lasting, and/or integratable LiDAR sensors for use on a wide variety of mobile platforms. Aspects of the technology described herein are directed to meeting these demands.

US 2015/029571 A1 describes an optical scanning device comprising a first rotatable optical component and a second rotatable optical component. The first and second optical components are configured to rotate about a common optical axis and further configured to deflect an optical path of light transmitted or received through the optical scanning device. The device further comprises a mounting bracket positioned between the first and second optical components and comprises first and second motor assemblies configured to rotate the corresponding first and second optical components about the optical axis independently of each other. An inner portion of each of the first and second optical components is mounted to an outer portion of the corresponding first and second motor assemblies such that the optical axis is configured to extend through the center of the first and second optical components and tubes.

US 2018/284282 A1 describes a sensor system comprising a light source generating a light pulse that is collimated, and a plurality of optical elements. Each of the plurality of optical elements is configured to rotate independently about an axis that is substantially common, and the plurality of optical elements operate to collectively direct the light pulse to one or more objects in an angle of view of the sensor system. Furthermore, the sensor system can comprise a detector configured to receive, via the plurality of optical elements, at least a portion of photon energy of the light pulse that is reflected back from the one or more objects in the angle of view of the sensor system, and convert the received photon energy into at least one electrical signal.

US 2019/146061 A1 describes a LIDAR system including a static monolithic LIDAR transceiver, a collimating optic, and a first rotatable wedge prism. The static monolithic LIDAR transceiver is configured to transmit a laser beam and receive reflected laser light from a first target object. The collimating optic is configured to narrow the transmitted laser beam to produce a collimated laser beam. The first rotatable wedge prism is configured to steer the collimated laser beam in a direction of the first target object based on the first rotatable wedge prism being in a first position.

### SUMMARY

The present invention relates to a LiDAR system according to claim 1 and a method according to claim 12. Claims 2 to 11 refer to specifically advantageous realizations of the LiDAR system according to claim 1.

### BRIEF DESCRIPTION OF THE DRAWINGS

Each of Figure 1 to Figure 19 does not necessarily show each feature of the present invention as defined by the independent claims.
Figure 1 is a schematic block diagram of a system for sensing an environment around a vehicle or other moving object, in accordance with embodiments of the present technology.
Figure 2 is a partially schematic illustration of a system having optical elements positioned to transmit and receive light or other radiation, in accordance with embodiments of the present technology.
Figure 3A is a partially schematic illustration of a representative light path configured in accordance with embodiments of the present technology.
Figure 3B is a partially schematic illustration of an emitter having one or more emitter elements configured in accordance with embodiments of the present technology.
Figure 3C is a partially schematic illustration of a receiver having one or more receiver elements configured in accordance with embodiments of the present technology.
Figure 4 is a partially schematic illustration of a system having multiple optical elements with bearings configured in accordance with embodiments of the present technology.
Figure 5A is a partially schematic illustration of a system having components with occluded areas, and corresponding light paths, in accordance with embodiments of the present technology.
Figure 5B is a partially schematic illustration of a collimating element with a light extinction treatment configured in accordance with embodiments of the present technology.
Figure 5C is a partially schematic illustration of a collimating element having another light extinction treatment configured in accordance with embodiments of the present technology.
Figure 6 is a partially schematic illustration of a system having an angularly offset emitted light axis configured in accordance with embodiments of the present technology.
Figure 7 is a partially schematic illustration of a system having a laterally offset emitted light axis configured in accordance with embodiments of the present technology.
Figure 8A is a partially schematic illustration of a system having a laterally offset optical axis configured in accordance with further embodiments of the present technology.
Figures 8B and 8C illustrate systems having at least three optical elements configured in accordance with representative embodiments of the present technology.
Figure 9 is a partially schematic illustration of an actuator having bearing elements arranged in accordance with representative embodiments of the present technology.
Figure 10A is a partially schematic illustration of an actuator having an optical element and yoke arranged in accordance with representative embodiments of the present technology.
Figure 10B is a partially schematic illustration of an actuator having a yoke and bearings configured in accordance with further representative embodiments of the present technology.
Figure 11 is a partially schematic illustration of an actuator having a rotor positioned within an optical element in accordance with representative embodiments of the present technology.
Figure 12A is a partially schematic illustration of an actuator having bearing elements and a yoke carrying an optical element in accordance with embodiments of the present technology.
Figure 12B is a partially schematic illustration of a representative stator of the type shown in Figure 12A.
Figure 12C is a partially schematic, isometric illustration of a stator configured in accordance with representative embodiments of the present technology.
Figure 12D is a partially schematic, isometric illustration of a rotor carried by a yoke and configured in accordance with representative embodiments of the present technology.
Figures 13A and 13B are partially schematic illustrations of actuators having shaft supports configured in accordance with representative embodiments of the present technology.
Figures 14A and 14B are partially schematic illustrations of actuators having shaft supports and/or other representative elements inclined in accordance with representative embodiments of the present technology.
Figures 15A and 15B illustrate details of representative inclined surfaces in accordance with embodiments of the present technology.
Figures 16A and 16B illustrate optical elements and corresponding yokes configured in a rotationally balanced combination in accordance with representative embodiments of the present technology.
Figures 17A and 17B illustrate representative systems configurations with preload forces applied to corresponding bearing elements in accordance with representative embodiments of the present technology.
Figures 18A-18E illustrate representative configurations of optical elements having sloped, angled, or inclined surfaces arranged in accordance with embodiments of the present technology.
Figure 19 is a partially schematic illustration of representative vehicles and/or other devices on which sensing systems described herein are included, in accordance with representative embodiments of the present technology.

### DETAILED DESCRIPTION

The present technology is directed generally to small bearings and motors for driving multi-element optical scanning devices, and associated systems and methods. In representative embodiments, the bearings are configured to be positioned within openings of the optical elements, as opposed to at the outer edges of the optical elements. This arrangement can reduce the velocities associated with the bearing components, thereby reducing component wear and extending the lifetime of the devices. The motors can be integrated with the bearings and the optical elements in manners that are more compact than traditional devices, allowing these devices to be used in contexts where low weight and low volume provide significant overall system advantages.

Representative ranging devices (e.g., LiDAR devices) are described under Heading 1 below ("Introduction"). Representative devices and systems that incorporate the small bearings and/or motors into multi-element devices are described in further detail under Heading 2 below ("Representative Systems and Methods").

### 1. Introduction

Representative devices in accordance with the present technology include LiDAR devices, laser ranging equipment and other electronic equipment. In representative implementations, a ranging device is used to sense the external environment and obtain corresponding information, for example, the distance to a target, the azimuth angle of an object or component, the strength of reflected light or other radiation, the speed of an object, among others. For example, the ranging device can detect the distance from the detector to a target object by measuring the light propagation time between the ranging device and the object, that is, the light flight time (time-of-flight, or "TOF"). The ranging device can use other techniques in addition to or in lieu of TOF to detect the distance from the ranging device to the object, such as a ranging method based on phase movement (phase shift) measurements, or a ranging method based on frequency movement (frequency shift) measurements.

Throughout the discussion of the present technology, the radiation emitted and received by the ranging device may be referred to as light, laser light, beams, etc. Unless otherwise noted, such terms are used as representative examples of electromagnetic radiation. Accordingly, the present technology includes all suitable electromagnetic radiation, whether in the visible spectrum or not.

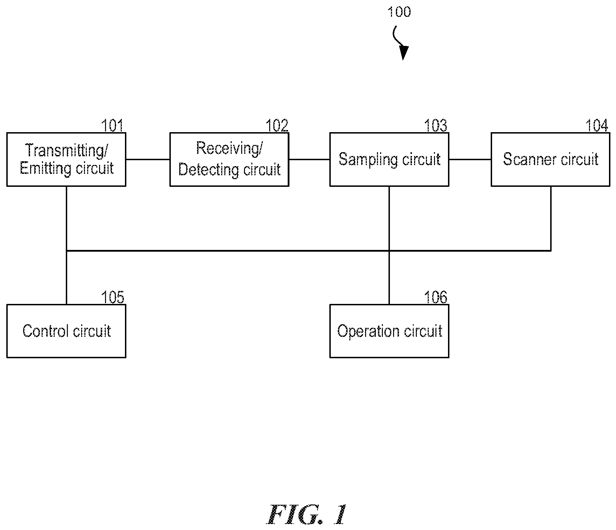

Figure 1 illustrates a representative system 100 (e.g., for performing ranging tasks) that can include a transmitting (or emitting) circuit 101, a receiving (or detecting) circuit 102, a sampling circuit 103, and an operation circuit 104. The transmitting or emitting circuit 101 can emit light, or other electromagnetic, pulse sequences (such as laser pulse sequences), e.g., in the form of a beam. The receiving circuit 102 can receive the light pulse sequence reflected by the detected object, and convert the light pulses to an electrical signal (e.g., via the photoelectric effect). The electrical signal can be processed and then output to the sampling circuit 103. The sampling circuit 103 directs sampling results to an operation circuit 106 which can determine the distance between the ranging system 100 and the detected object, and/or other useful information.

Optionally, the ranging system 100 can also include a control circuit 105 that controls one or more of the illustrated circuits, for example, the working time of each circuit and/or the operational parameters of each circuit.

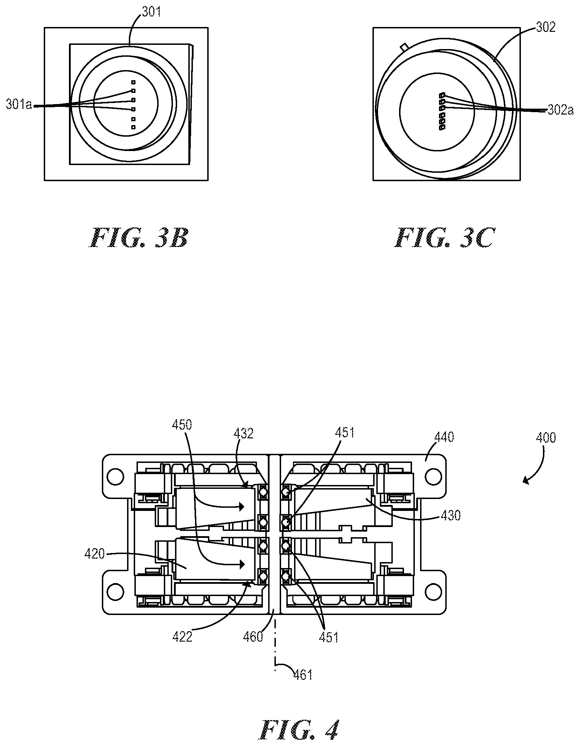

Although the illustrated ranging system shown in Figure 1 includes a transmission circuit, a receiving circuit, a sampling circuit and an operation circuit for detecting reflections from the emitted beam, in other embodiments, the number of transmission circuits, receiving circuits, sampling circuits, and/or computing circuits can be greater, e.g., for emitting/detecting multiple beams in the same direction or in different directions. The multiple beams (e.g., at least two beams) can be emitted at the same time, or they can be emitted at different times. In one example, the circuitry chips for at least two emitting circuits are encapsulated in the same module. For example, multiple laser emitting chips can be encapsulated together and placed in the same encapsulation space, as described later with reference to Figure 3B.

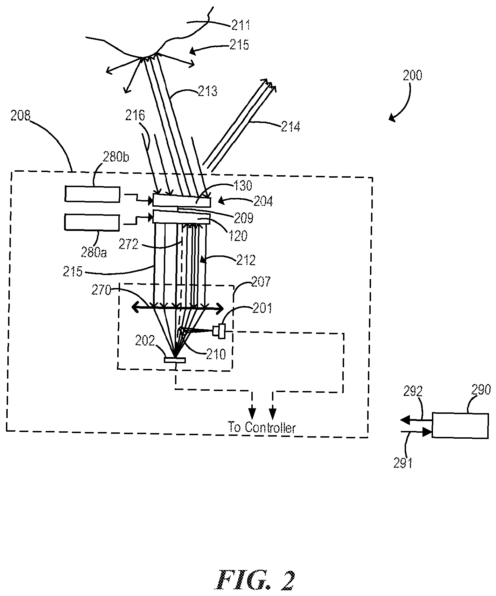

In some implementations, in addition to the circuit shown in Figure 1, the ranging system 100 can also include a scanning module (described further below with reference to Figure 2), which is used to change the propagation direction of at least one laser pulse sequence emitted by the transmitting circuit.

In some implementations, modules including the emitting circuit 101, receiving circuit 102, sampling circuit 103 and operation circuit 104, optionally further including the control circuit 105, are referred to as a ranging module. The ranging module can be independent of other modules, for example, the scanning module.

The beam emitted by the ranging device and the beam reflected by an object in the environment can share at least part of the same optical path in the ranging device, e.g., in a coaxial arrangement. Alternatively, the ranging device can include a heterogeneous optical path, that is, the beam emitted by the ranging device and the reflected beam are transmitted along different optical paths in the ranging device. Figure 2, described further below, is a schematic diagram of an embodiment of the measuring device of the present technology that includes a coaxial light path.

Referring now to Figure 2, a representative system 200 includes a ranging device 208. The ranging device 208 can include the transmitter (or emitter) 201 (which can include the transmitting circuit 101 described above), a collimation element 270, a receiver or detector 202 (which can include the receiving circuit 102, sampling circuit 103 and operation circuit 106 described above), and an optical path change element 210. The ranging device 208 is used to transmit a beam 212 and receive the reflected beam, converting the returned beam into an electrical signal. Accordingly, the transmitter 201 and receiver 202 may be referred to collectively as a transceiver 207. In some embodiments, the transmitter 201 can emit a laser pulse sequence, e.g., in the form of a laser beam. The laser beam can be a narrow bandwidth beam with wavelengths within or outside the visible light range. The collimation element 270 is arranged along an emitted light path or optical axis 272 of the transmitter 201 and is used to direct the beam 212 emitted from the transmitter 201, e.g., to straighten the beam to include parallel components before it reaches the associated scanner 204. The collimation element 270 can also be used to converge at least part of the reflected radiation 215 before it reaches the receiver 202. The collimation element 270 can include a collimation lens or other component configured to collimate the beam(s).

In an embodiment shown in Figure 2, the paths along which the emitted light and the received light pass, merge in the ranging device 208 between the scanner 204 and the collimation element 270, so that the emitted light and the received light can share the same collimation element 270, making the light paths more compact. In other implementations, the system can include two collimation elements: one for emitted light and one for received light.

In the embodiment shown in Figure 2, the beam aperture of the transmitter 201 is relatively small, and the beam aperture of the returned light received by the ranging device 208 is larger, so the optical path change element 210 can use a small area reflector to merge the paths of the emitted light and the received light. In other implementations, the optical path change element 210 can use a reflector with a through hole, wherein the through hole is used to pass the emitted light, and the reflector is used to reflect the returned light to the receiver 202.

The scanner 204 is placed along the path of the emitted light (e.g., beam) 212, and changes the direction of the beam collimated by the collimation element 270. The beam is then directed into the external environment, and the returned or reflected beam is directed by the scanner 204 back to the collimation element 270.

In some embodiments, the scanner 204 can include at least one optical element to change the propagation path of the beam, by reflection, refraction, diffraction, and/or other techniques. For example, the scanner 204 can include one or more lenses, mirrors, prisms, vibrators, gratings, liquid crystals, optical phased arrays, and/or any suitable combination of the foregoing optical elements. In one example, at least part of the optical element moves. In some embodiments, multiple optical elements of the scanner 204 can rotate or vibrate relative to a common axis (e.g., a rotation axis) 209, and each rotating and/or vibrating optical element can continuously alter the propagation direction of the emitted beam. In some embodiments, multiple optical elements of the scanner 204 can rotate and/or vibrate at different speeds, or at the same speed. In some embodiments, multiple optical elements of the scanner 204 can rotate/vibrate about different axes. In some embodiments, the multiple optical elements can rotate and/or vibrate in the same direction or in different directions.

In some embodiments, the scanner 204 includes a first optical element 120, coupled to a first actuator 280a to rotate the first optical element 120 around the rotation axis 209, thus changing the direction of the emitted beam 212. The angle between the direction of the beam 212 after passing through the first optical element 120 varies with the rotation of the first optical element 120. In one embodiment, the first optical element includes non-parallel opposing surfaces, e.g., a wedge-shaped prism with a thickness variation along at least one axis.

The scanner 204 can also include a second optical element 130, coupled to a second actuator 280b to rotate about the rotation axis 209, e.g., at a speed different than the rotation speed of the first optical element 120. The second optical element 130 changes the direction of the beam exiting the first optical element 120. Depending upon the configuration, the first optical element 120 and the second optical element 130 can be driven by the same or different actuators, but in either case, can direct the emitted beam 212 into different directions, thus scanning a larger space. The second optical element 130 can include any of the foregoing elements described above with reference to the first optical element 120, and can be the same as or different than the first element 120. In some embodiments, the scanner 204 further includes a third optical element (not shown in Figure 2) and associated actuator.

Regardless of the number of optical elements included in the scanner 204, the scanner 204 can receive the incoming beam 212 (e.g., from the collimation element 270) and, as a result of rotating, vibrating, and/or undergoing other movement, redirect the incoming light in multiple directions, shown in Figure 2 as a first direction 213 and a second direction 214. The emitted light strikes an object 211 in the environment, creating reflected light 215, some of which is directed in a third direction 216. Accordingly, at least a portion of the reflected light returns to the scanner 204, passes through the one or more optical elements, through the collimation element 270, and to the receiver 202. The receiver 202 generates an electrical signal which provides an input 291 to a controller 290. The controller 290 processes the input, along with other inputs, and directs an output 292. The output 292 can be used to control any of a variety of functions, including, but not limited to, the direction, speed, and/or orientation or pose of an autonomous or other vehicle.

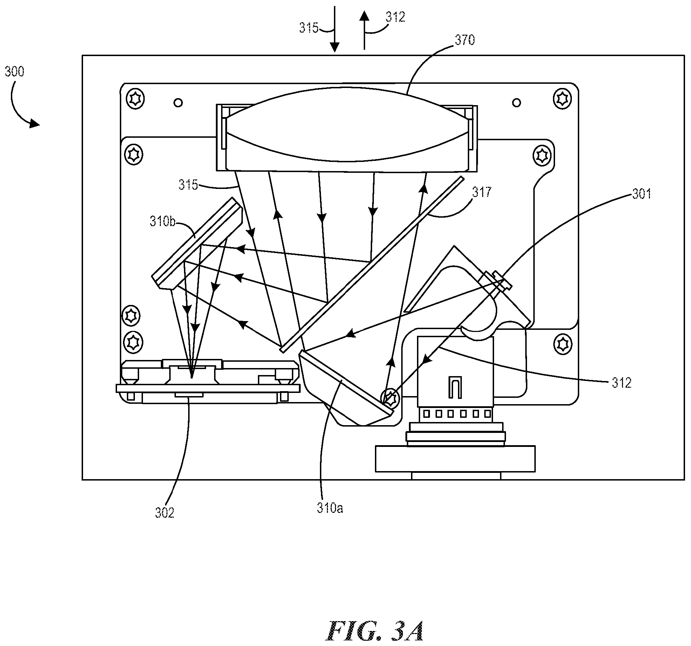

Figure 3A is a partially schematic illustration of a representative system 300 illustrating selected elements in further detail. The system 300 includes a transmitter or emitter 301 that directs emitted light 312 to a first mirror 310a. The first mirror 310a redirects the light to a collimation element 370, which in turn directs emitted light 312 to a scanner (not shown in Figure 3A). Reflected light 315 is returned to the collimation element 370 where it passes through a splitter 317. A portion of the reflected light 315 impinges on a second mirror 310b, which redirects the reflected light to a receiver or detector 302. The receiver 302 generates the electrical signal which is directed to the controller 290 (Figure 2).

Figure 3B illustrates a representative emitter 301 that includes multiple emitter elements 301a, which can be encapsulated together. Figure 3C illustrates a representative receiver 302, which includes multiple receiver elements 302a. The emitter elements 301a and receiver elements 302a can include any of a variety of suitable solid state devices, and/or other devices configured to emit and receive radiation inside or outside the visible spectrum. For example, the emitter elements 301a can include laser diodes, and the receiver elements 302a can include photodiodes.

The resulting information obtained from the receiver 302 can be used to generate distance and/or azimuth data corresponding to the detected object 211 (Figure 1). This information can in turn be used for remote sensing, obstacle avoidance, mapping, modeling, navigation and/or other functions. The ranging devices in accordance with the present technology can be applied to a mobile platform, e.g., an autonomous or partially autonomous vehicle.

### 2. Representative Systems and Methods

One drawback associated with some conventional sensor systems is that they are large and bulky, which makes them difficult to integrate into smaller and/or weight-sensitive platforms. One cause for the additional bulk is the bearings that are used to provide smooth, low-friction rotation for the optical devices. For example, such bearings are typically placed around the outside of the optical devices. The optical devices are also typically driven from a radially outward position, so as to avoid interfering with the optical light paths within the scanner. Aspects of the present technology are directed to, instead, providing apertures or openings within the optical elements and placing the bearings and/or other elements of the drive mechanism within the openings. While this approach results in occluded regions along the optical path, the technology further includes techniques to address the occlusion, resulting in devices that are compact, lightweight, and yet still provide suitable ranging and detection functions.

Figure 4 illustrates a representative system 400 having a housing 440 in which a first optical element 420 (e.g., a first prism) and a second optical element 430 (e.g., a second prism) are positioned. Each optical element includes a corresponding opening, illustrated as a first opening 422 and a second opening 432. A shaft 460 extends along a shaft axis 461 and passes through the first and second openings 422, 432. One or more bearings 450, for example, each including multiple bearing elements 451, are positioned within the corresponding openings to stabilize the rotary motion of the first and second optical elements 420, 430 relative to the shaft 460. Accordingly, the shaft 460, in combination with the bearing(s) 450, can act as a mandrel to keep the optical elements 420, 430 centered as they smoothly rotate. By placing the bearings 450 close to the radial centers of the optical elements, the bearings 450 can be made smaller than bearings in typical conventional installations. In addition, the linear velocities near the radial centers of the optical elements are lower than at the tips of the optical elements, which reduces the wear and tear on the bearings and therefore can extend the operational life of the system 400. The bearings 450 can have a ball bearing configuration, for example, with an inner race, an outer race, and multiple balls between the races, optionally further including one or more retainers, and/or other suitable types of bearings. Such bearings can typically include oil or grease which, if the bearing heats up significantly, breaks down or otherwise suffers a reduction in efficacy. Accordingly, reducing the velocity of the bearing components can increase bearing efficiency and life by reducing the likelihood for adversely affecting the lubricant. Furthermore, at low temperatures, the lubricant becomes more viscous, and, with the greater moment arm resulting from the bearings being positioned at the outer periphery of the optical elements, can create so much friction that the optical elements are unable to rotate, and/or the actuators that drive the optical elements draw so much current that the associated circuitry fails. Again, positioning the bearings closer to the radial centers of the optical elements can reduce or eliminate this undesirable effect. Still further, by reducing frictional loads on the bearings, the amount of power required by the motors or other actuators driving the optical elements can be reduced, not only at start up, but also during normal operating conditions.

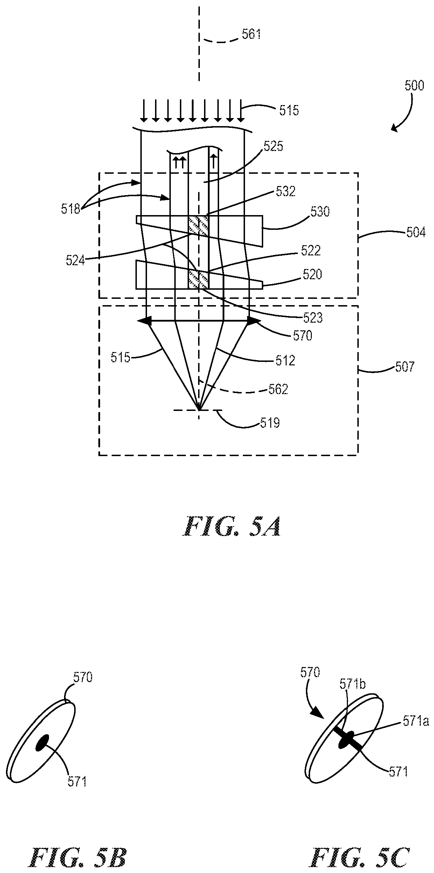

Figure 5A illustrates further elements of a representative system 500. The system includes a transceiver 507 that transmits emitted light and receives reflected light to detect information corresponding to the external environment. The emitted light 512 proceeds from a focal plane 519, oriented along an orthogonal axis 562, to a collimating element 570 that collimates the light directed to the scanner 504. At the scanner 504, a first optical element 520 and a second optical element 530 receive the incoming emitted light 512, and rotate about a shaft axis 561. Each optical element includes a corresponding opening 522, 532 which houses a bearing, and which presents one or more occlusion surfaces 523 and produces a corresponding occlusion area 524. The occlusion area 524 results in an emitted light gap 525. The emitted light 512 proceeds along an optical path 518 to an object (not shown in Figure 5A) which reflects the light, producing reflected light 515 that passes along the optical path 518 in the reverse direction. This arrangement is compact, and the light reduction resulting from the occlusion area 524 can be at or below acceptable levels.

The emitted light 512 passing from the collimating element to the scanner 504 can impinge upon, and reflect from, the occlusion areas 524 of the first and/or second optical elements 520, 530. Accordingly, typical designs will include occlusion areas 524 that are as small as possible, while providing enough area to accommodate the associated bearings and/or other elements. To reduce or eliminate such reflections which could otherwise create optical noise or other interference within the scanner 504, the collimating element 570 includes light extinction treatments, described further below with reference to Figures 5B and 5C.

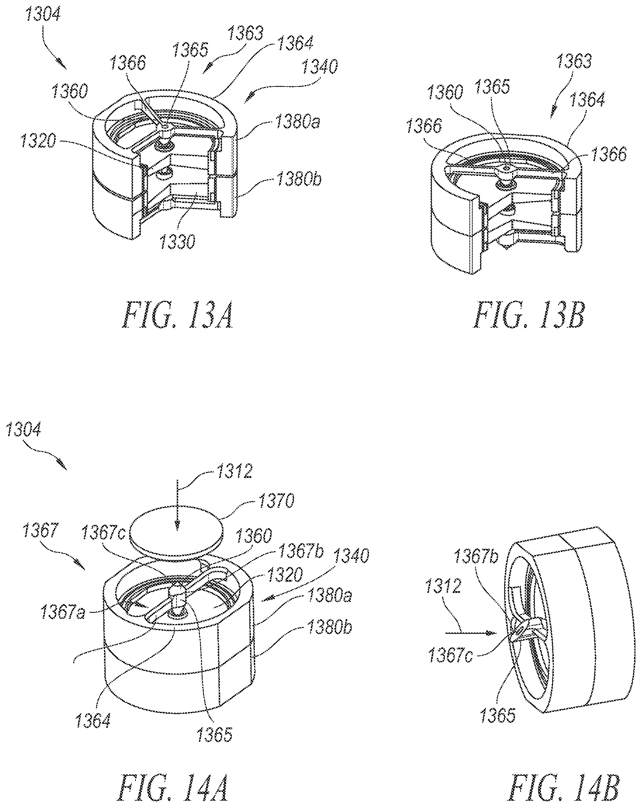

Referring first to Figure 5B, the collimating element 570 includes a light extinction treatment 571 facing toward the focal plane 519 shown in Figure 5A. Suitable light extinction treatments 571 can include materials that are highly absorptive of the emitted light (and/or have low reflectivity), thus reducing internal reflections within the scanner 504. Suitable materials include matt black oxidation, and/or coatings with light extinction paint. Such paint or other coatings can be applied to specific parts of the optical (or other) elements to prevent the emitted light striking such parts and producing undesirable reflections. As described later with reference to Figures 14A-15B, the device can include inclined or sloped surfaces to redirect internal reflections for absorption or attenuation. The light extraction treatment can have different patterns and/or arrangements, depending upon the shape of the occlusion areas 524 shown in Figure 5A. For example, the light extraction treatment 571 shown in Figure 5B has a generally circular shape located at the center of the collimating element 570, corresponding to a similarly-shaped occlusion area. In Figure 5C, the light extinction treatment 571 includes a first generally circular region 571a, and a second region 571b that extends radially outwardly from the first region 571a. The second region 571b can account for other structures within the scanner (e.g., spokes or other support structures, described later with reference to Figures 13A, 13B) that may otherwise also reflect light within the scanner, creating optical noise.

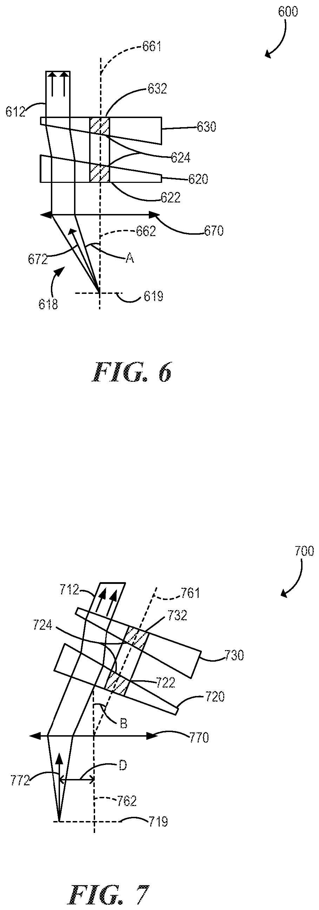

In addition to the light extraction treatments described above, representative systems can include configurations that direct the emitted light in a way that avoids impinging on the occlusion areas, thus reducing the need for light extinction treatments. Figures 6-8C illustrate representative systems having such configurations.

Referring first to Figure 6, a representative system 600 includes an optical path 618 that extends from a corresponding focal plane 619, at a non-zero inclination angle A relative to an orthogonal axis 662. In Figure 6, the orthogonal axis 662 is orthogonal to the collimating element 670 and/or the focal plane 619, and is aligned with a shaft axis 661 passing through openings 622, 632 in the corresponding first and second optical elements 620, 630. Because the emitted light 612 is directed radially outwardly from the occlusion areas 624 of the optical elements 620, 630, the optical elements need not include as much light extinction treatment. While the amount of light emitted by the system 600 may be reduced relative to an arrangement that utilizes the full radial extent of the optical elements outside the occlusion areas 624, the light reduction is not expected to significantly affect system performance.

As discussed above with reference to Figure 6, the illustrated emitted light axis 672 is oriented at an angle relative to the orthogonal axis 662. In other embodiments, the optical elements can be oriented at such an angle. For example, referring now to Figure 7, a representative system 700 include a focal plane 719 and a corresponding emitted light axis 772 that is offset by an offset distance D from a corresponding orthogonal axis 762 of the corresponding collimating element 770 and/or focal plane 719. The first and second optical elements 720, 730 each have corresponding openings 722, 732 and occlusion areas 724. The optical elements 720, 730 are positioned for rotation about a shaft axis 761, which is oriented at a non-zero inclination angle B relative to the orthogonal axis 762. Accordingly, the emitted light 712 passes along the corresponding emitted light axis 772 in a manner that avoids or reduces impingement on the occlusion areas 724.

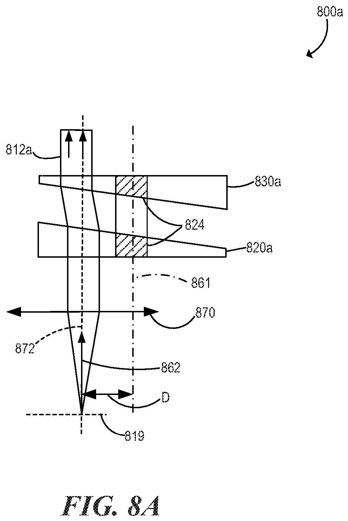

Figures 8A-8C illustrate further representative embodiments of systems for which the emitted light is directed (at least in part) around or away from the corresponding occlusion areas. Referring first to Figure 8A, a system 800a directs emitted light 812a from a corresponding focal plane 819 along an emitted light axis 872 that is offset by an offset distance D from the corresponding orthogonal axis 862 of the collimating element 870 and/or focal plane 819. The system 800a includes first and second optical elements 820a, 830a that rotate relative to the shaft axis 861, while the emitted light 812a bypasses (at least in part) the corresponding occlusion areas 824.

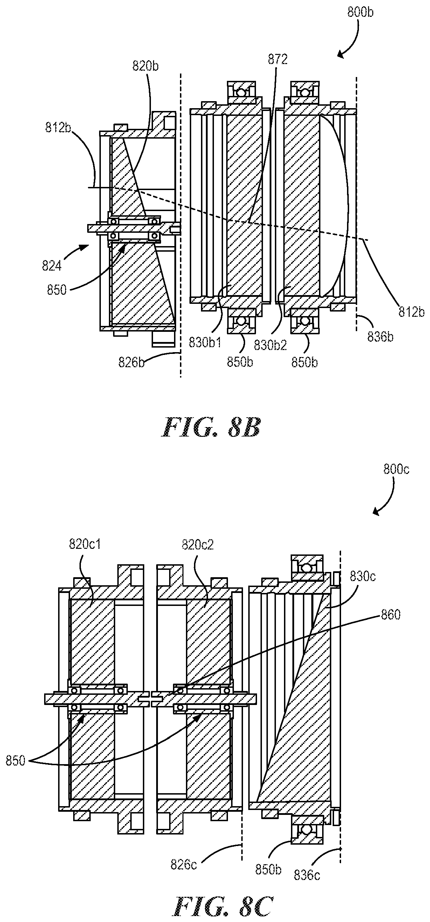

Similar arrangements can be used for systems that include more than two optical elements. For example, Figure 8B illustrates a representative system 800b that produces emitted light 812b passing through a first optical element 820b to a first plane 826b. The first optical element 820b can be supported using one or more centrally-located small bearings 850, e.g. of the type shown in Figure 4. The corresponding emitted light axis 872 is offset from the occlusion area 824 associated with the first optical device 820b. The system 800b can further include multiple second optical elements 830b, shown as second optical elements 830b1 and 830b2. The second optical elements 830b redirect the emitted light 812b to a second plane 836b, and can be supported by larger bearings 850b positioned outwardly around the optical elements 830b.

Referring next to Figure 8C, a representative system 800c includes a shaft 860 carried by multiple first optical elements 820c, illustrated as first optical elements 820c1 and 820c2. The emitted light passes through a first plane 826c, through a corresponding second optical element 830c and to a second optical plane 836c. In this configuration, the first optical elements 820c1, 820c2 are supported by one or more small, centrally-located bearings 850, and the second optical element 830c is supported by a larger, outwardly positioned bearing 850b.

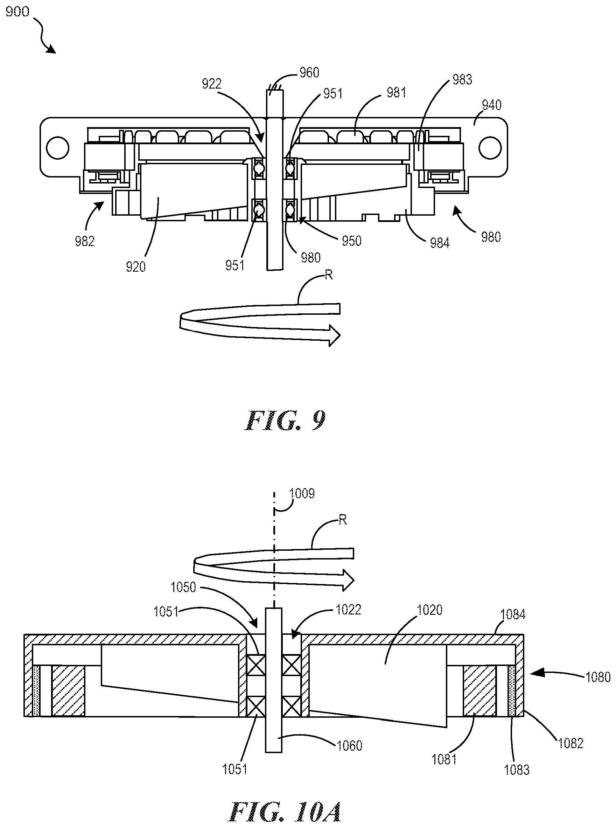

One feature of the representative embodiments shown in Figures 8B and 8C is that they can include more than two optical elements. Another feature of the representative embodiments shown in Figures 8B and 8C is that they can include a combination of bearing arrangements. For example, the first optical elements in Figures 8B and 8C include small bearings 850 positioned close to the rotation axis of the first optical elements, while the second optical elements include larger bearings 850b positioned around the outsides of the second optical elements. The smaller bearings can be used for components having relatively high rotation speeds, and the larger bearings can be used for components having slower rotation speeds. Even if fewer than all the optical elements include bearing arrangements located near the rotation axis (as shown in Figures 8B and 8C), the devices nevertheless are expected to provide an overall lighter and more efficient arrangement. In other embodiments (not shown in Figures 8B and 8C), all the optical elements, or at least more of the optical elements, can include bearing arrangements with the bearing elements located close to the rotation axis. Further details of the bearing arrangements and associated drive mechanisms are described in further detail below with reference to Figures 9-17B.

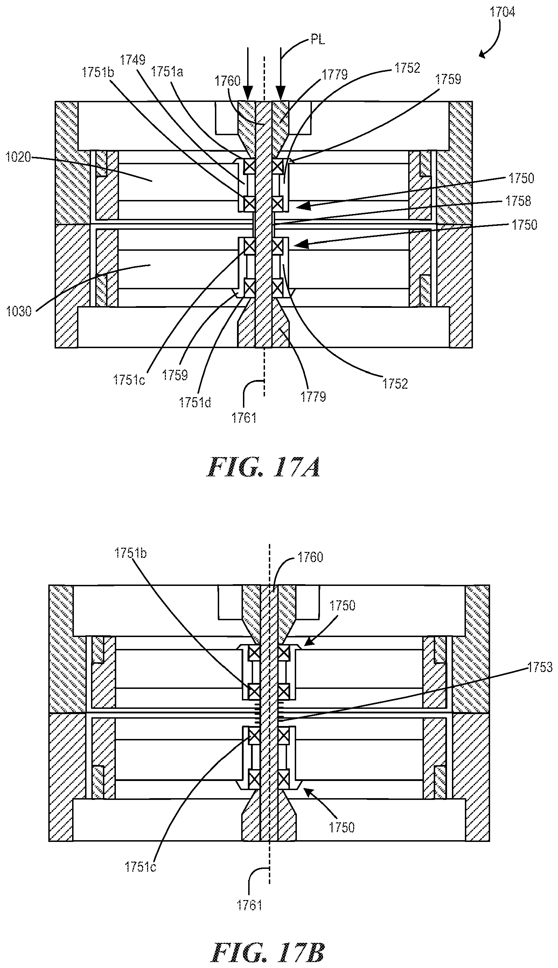

Figure 9 is a partially schematic, cross-sectional illustration of a system 900 that includes a housing 940 in which is positioned an actuator 980 that drives an optical element 920 supported relative to a fixed shaft 960 to rotate as indicated by arrow R. The optical element 920 includes an opening 922 through which the shaft 960 passes, and the actuator 980 includes a rotor 982 driven by an outwardly positioned stator 981. The rotor 982 carries a rotor magnet 983 and is attached to a rotor yoke 984. The rotor yoke 984 carries and rotates the optical element 920. A bearing 950 is positioned between the shaft 960 and the optical element 920 (e.g., at least partially within the opening 922) and can include one or more bearing elements 951. Further details of arrangements for supporting and pre-loading the bearing components are described later with reference to Figure 17A-17B.

Figure 10A illustrates a representative optical element 1020 driven by a corresponding actuator 1080 having a stator positioned radially inwardly from the corresponding rotor. The optical element 1020 can correspond to any of the optical elements described above. The actuator 1080 drives the optical element 1020 to rotate relative to a fixed shaft 1060, as indicated by rotation direction arrow R. The optical element 1020 is supported relative to the shaft 1060 by a bearing 1050 that includes one or more bearing elements 1051. The illustrated actuator 1080 includes a fixed stator 1081, and a rotor 1082 that includes a rotor magnet 1083 that is positioned outwardly from the stator 1081. The rotor 1082 is coupled to the optical element 1020 via a yoke 1084. Accordingly, when energized, the rotor 1082 spins the optical element 1020 about a rotation axis 1009 in the rotation direction R, while the optical element 1020 is stabilized relative to the shaft 1060 via the bearing 1050. As described above, the bearing 1050 is positioned within an opening 1022 positioned along the rotation axis 1009 to reduce the velocities experienced by the bearing elements 1051 and thus reduce heating and wear. The bearing elements 1051 can include ball bearings, and/or other suitable rotary bearing components.

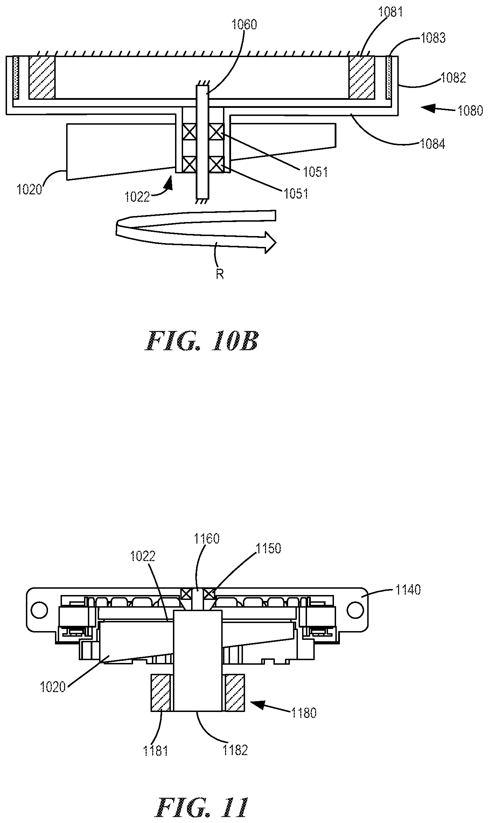

In Figure 10A, the optical element 1020 is positioned within the ringshaped stator 1081. In other embodiments, the optical element 1020 can have other positions relative to the stator 1081. For example, referring now to Figure 10B, the optical element 1020 is positioned axially outside the stator 1081, and outside the rotor magnet 1083. The rotor magnet 1083 is carried by the rotor 1082, which is connected to the optical element 1020 via the yoke 1084 in a manner generally similar to that described above with reference to Figure 10A. An advantage of the arrangement shown in Figure 10A is that the "nested" arrangement of the optical element 1020 within the stator 1081 and rotor 1082 can provide for a compact arrangement.

Figure 11 is a partially schematic illustration of another actuator 1180 having the optical element 1020 positioned axially away from the corresponding stator 1181 and rotor 1182. In addition, in this embodiment, the corresponding shaft 1160 is supported relative to a housing 1140 via a bearing 1150. The rotor 1182 is connected to the optical element 1020 to rotate the optical element 1020, and is connected to the shaft 1160 which stabilizes the optical element 1020 relative to the housing 1140 via the bearing 1150.

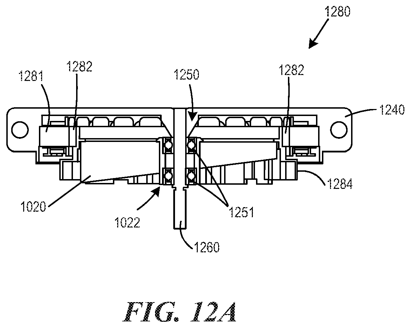

Figure 12A illustrates a representative actuator 1280 having a housing 1240 carrying a fixed stator 1281 and a fixed shaft 1260. The stator 1281 drives a corresponding rotor 1282, which carries the optical element 1020 via a yoke 1284. The optical element 1020 is stabilized relative to the shaft 1260 via a corresponding bearing 1250 having one or more bearing elements 1251.

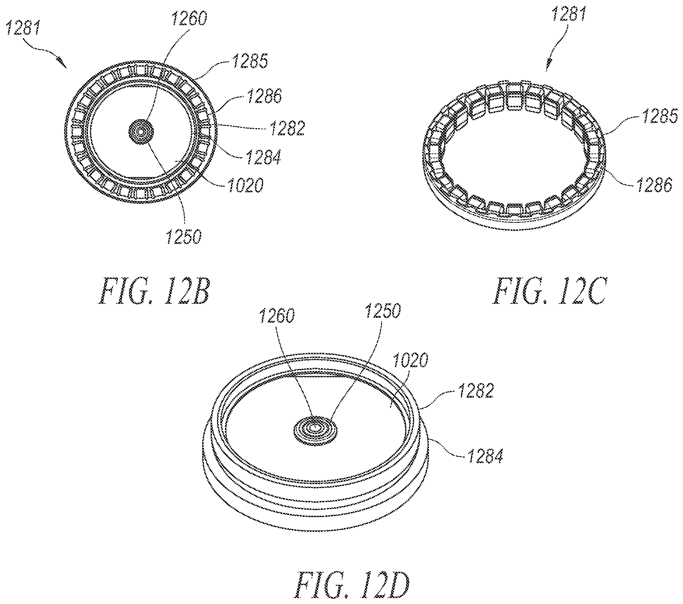

Figure 12B illustrates several of the elements described above with reference to Figure 12A, including the shaft 1260, the stator 1281, and the rotor 1282. The stator 1281 includes a stator core 1285 having stator windings 1286. The core 1285 and windings 1286 are shown in further detail in Figure 12C. Figure 12D illustrates an isometric view of the shaft 1260, the bearing 1250 (positioned outwardly from the shaft 1260), the optical element 1220 (positioned outwardly from the bearing 1250), the rotor 1282 (positioned outwardly from the optical element 1220), and the yoke 1284 (positioned outwardly from the rotor 1282). The yoke 1284 can be a part of the rotor 1282, or can be attached to the rotor. The yoke 1284/rotor 1282 can carry a magnet, which is driven by the electrical current carried by the stator windings 1286.

Figures 13A-15B illustrate representative arrangements for supporting shafts and for reducing optical noise in a scanner via inclined, sloped, or angled surfaces. Referring first to Figure 13A, a representative scanner 1304 include a first optical element 1320 driven by a corresponding first actuator 1380a, and a second optical element 1330 driven by a second actuator 1380b. The scanner 1304 can further include a shaft 1360 which stabilizes the optical elements 1320, 1330 as they rotate, and a shaft support 1363 that supports the shaft 1360. The shaft support 1363 can include (or form a part of) an overall housing 1340 in which the optical elements 1320, 1330 are positioned. The shaft support 1363 can further include a rim 1364 carrying one or more spokes 1366. The spokes 1366 in turn carry a hub 1365 in which the shaft 1360 is received. The spokes 1366 can be thicker or deeper than they are wide, to provide increased strength (e.g., against bending) while reducing optical interference. In the illustrated embodiment, the shaft 1360 is fixed relative to the shaft support 1363. In other embodiments, the shaft 1360 can rotate, and can accordingly include bearings of the type described herein.

Figure 13B illustrates an arrangement similar to that shown in Figure 13A, with the shaft support 1363 including two spokes 1366 rather than three. The reduced number of spokes 1366 shown in Figure 13B can reduce optical interference in the scanner 1304, while the increased number of spokes 1366 shown in Figure 13A can improve the stability of the shaft 1360.

Figure 14A illustrates an arrangement similar to that shown in Figure 13B, but with selected elements including sloped, angled, or inclined surfaces so as to avoid or attenuate optical reflections within the scanner 1304. For example, several elements can include sloped surfaces 1367 (e.g., chamfers), including first sloped surfaces 1367a carried by the spokes 1366, second sloped surfaces 1367b carried by the hub 1365, and/or third sloped surfaces 1367c carried by the shaft 1360. The sloped surfaces can redirect emitted light 1312 exiting the collimating element 1370 so as to be absorbed by other elements in the scanner 1304 (e.g., the surfaces of the rim 1364 or the housing 1340) before reaching the first optical element 1320.

In an embodiment shown in Figure 14A, the sloped surfaces form a peak or inverted "V" shape. In other embodiments, for example as shown in Figure 14B, the sloped surfaces can be sloped in a single direction. In particular, the hub sloped surface 1367b is sloped in a single direction, as is the shaft sloped surface 1367c. In other embodiments, the sloped surfaces can have orientations and/or configurations other than those shown in Figures 14A-14B.

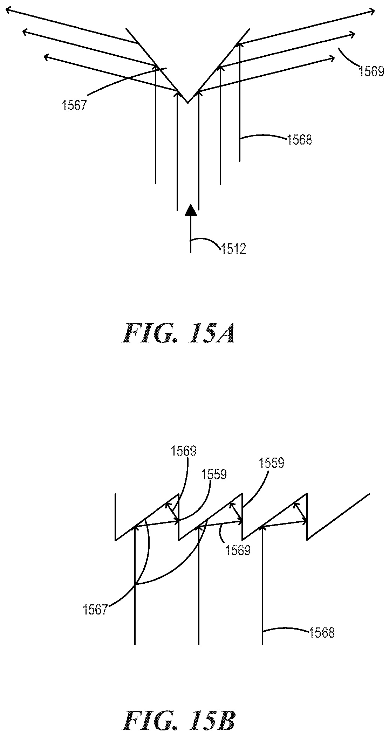

Figure 15A illustrates a representative sloped surface 1567 having a "V" shaped configuration. Emitted light 1512 forms incident radiation 1568, which is then redirected by the sloped surfaces 1567 to form reflected radiation 1569, which can be absorbed internally by other elements of the scanner 1304 (Figure 14A).

In Figure 15B, the sloped surfaces 1567 are positioned adjacent to corresponding absorptive surfaces 1559. The absorptive surfaces 1559 receive and absorb or extinguish the reflected radiation 1569. This arrangement can further reduce the optical noise within the associated scanner by capturing and absorbing reflected radiation before it is transmitted further within the scanner.

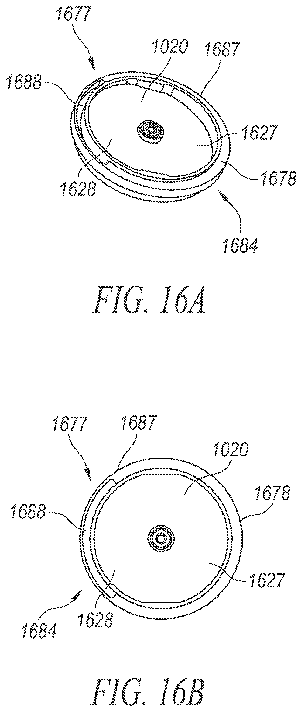

Figures 16A and 16B illustrate arrangements for balancing optical devices so as to reduce the tendency for the optical devices to wobble when rotated, and therefore reduce the loads on the associated bearings. Because the optical element 1020 can have a wedge or prism shape (see, e.g., Figure 12A), the optical element 1020 can include a lighter region 1627 (toward the narrower side of the wedge) and a heavier region 1628 (toward the thicker side of the wedge). To account for this asymmetry, the yoke 1684 can include a complementary heavier region 1678 (positioned adjacent the lighter region 1627 of the optical element 1020) and a lighter region 1677 (positioned adjacent the heavier region 1628 of the optical element 1020). In particular embodiments shown in Figures 16A and 16B, the lighter region 1677 of the rim 1687 can be made lighter via one or more apertures 1688. In other embodiments, other techniques (e.g., using materials of different densities) can be used to provide a relative weight difference between the heavier region 1678 and the lighter region 1677. In any of these embodiments, as described above, the complementary lighter and heavier regions 1677, 1678 can balance the corresponding heavier and lighter regions 1628, 1627 of the optical element 1020 to provide an overall balanced assembly.

Figures 17A and 17B illustrate techniques for applying a preload to the bearings that stabilize the rotary motion of the optical elements. Referring first to Figure 17A, a representative scanner 1704 includes a first optical element 1020 and second optical element 1030, each supported by corresponding bearings 1750. The bearings can include one or more bearing elements, including first and second bearing elements 1751a, 1751b carried by one bearing 1750 (e.g., a bearing retainer or pedestal 1752), and third and fourth bearing elements 1751c, 1751d carried by the other bearing 1750. Each bearing 1750 (e.g., the bearing elements 1751a, 1751b, 1751c, 1751d) can include an inner race, outer race, and multiple balls between the inner and outer races. The inner races are fixed relative to the shaft 1760, and the outer races are fixed relative to the corresponding bearing retainer or pedestal 1752, which is in turn fixed relative to the corresponding optical element 1020, 1030. Two stator couplings 1779 support the fixed shaft 1760 (aligned along a shaft axis 1761) within the bearings 1750. An optional shaft sleeve 1758 provides a mechanical connection between the two bearings 1750. Accordingly, when an applied preload PL is applied to one stator coupling 1779, the force is transmitted to the other bearing 1750 (via the shaft sleeve 1758) to keep the bearings in position along the shaft 1760. In addition, an inwardly-facing step or projection 1749 of the bearing retainer 1752 can form two-oppositely facing recesses in which the bearing outer races are positioned, with the inwardly-facing step engaged with each bearing outer race. The shaft sleeve 1758 can engage the bearing inner races, causing the inner and outer races to be biased in opposite directions. The bearing retainer 1752 can also include one or more outwardly-facing steps or projections 1759 that engage with the corresponding first or second optical element 1720, 1730. The outer surface of the shaft 1760, and the inner surfaces of the bearings 1750, can be coated with an adhesive which is dried or cured before the preload PL is released. Accordingly, the adhesive can preserve the preload after manufacture. In another embodiment, shown in Figure 17B, the shaft sleeve 1758 can be replaced by a biasing element 1753 (e.g., a spring) that biases the two bearings 1750 away from each other, as an alternate technique for preloading the bearings and keeping the bearings in fixed positions relative to the shaft 1760.

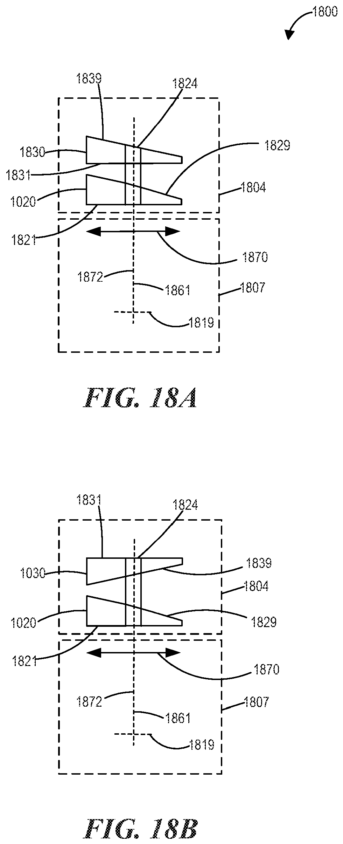

As discussed above, representative optical elements have a wedge or prism shape. This shape can be formed by an orthogonal surface (orthogonal to the incoming or outgoing optical path, or to the shaft axis 1761), and an inclined surface (inclined relative to the same path or optical axis). Multiple optical elements can have these surfaces arranged relative to each other in any of a number of suitable configurations, as illustrated below with reference to Figures 18A-18B.

Referring first to Figure 18A, a representative system 1800 includes a transceiver 1807 and a scanner 1804. The transceiver 1807 includes an emitter and receiver (not shown in Figure 18A) with a corresponding focal plane 1819 and optical path 1872. A collimator 1870 collimates the emitted radiation and directs it to the scanning module 1804. The scanning module 1804 houses the first optical element 1020 and the second optical element 1030 that rotate relative to a shaft or rotation axis 1861. The first optical element 1020 can include an orthogonal surface 1821 (orthogonal relative to the optical path 1872 and/or rotation axis 1861) and an inclined surface 1829 (oriented at a non-orthogonal angle relative to the optical path 1872 and/or rotation axis 1861). Similarly, the second optical element 1030 can include an orthogonal surface 1831 and an inclined surface 1839. In an embodiment shown in Figure 18A, the inclined surface 1829 of the first optical element 1020 faces toward the orthogonal surface 1831 of the second optical element 1030.

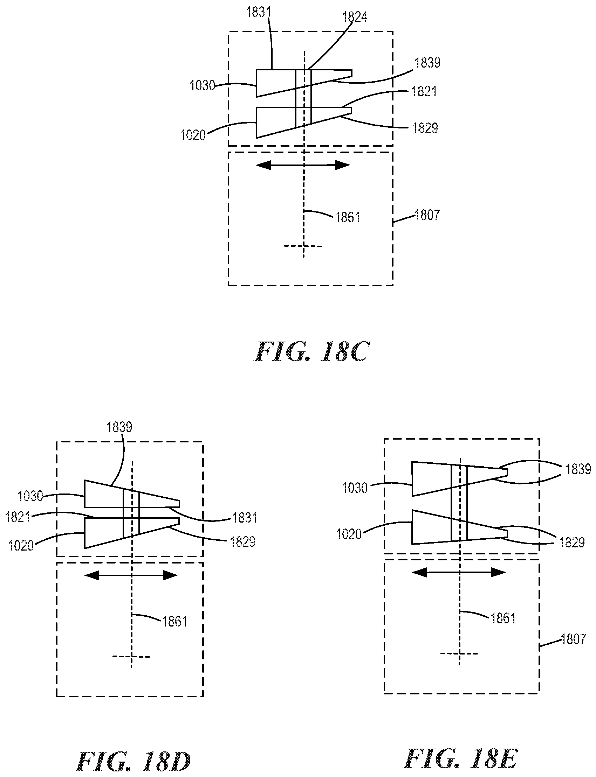

In an embodiment shown in Figure 18B, the inclined surface 1829 of the first optical element 1020 faces toward the inclined surface 1839 of the second optical element 1030. In Figure 18C, the orthogonal surface 1821 of the first optical element 1020 faces toward the inclined surface 1839 of the second optical element 1030. In Figure 18D, the orthogonal surface 1821 of the first optical element 1020 faces toward the corresponding orthogonal surface 1831 of the second optical element 1030. In Figure 18E, each of the first and second elements 1020 includes multiple (e.g., two) inclined surfaces. Accordingly, the first optical element 1020 includes two opposing inclined surfaces 1829, and the second optical element 1030 includes two inclined surfaces 1839. In still further embodiments, the optical elements can have different arrangements of surfaces and/or orientations. In any of these embodiments, the optical elements can be supported by bearings and/or driven by motors having any suitable one (or more) of the configurations described herein. As discussed above, such arrangements can provide lightweight, compact, long-lasting reduced power, and/or otherwise beneficial devices for scanning the environment around a mobile platform.

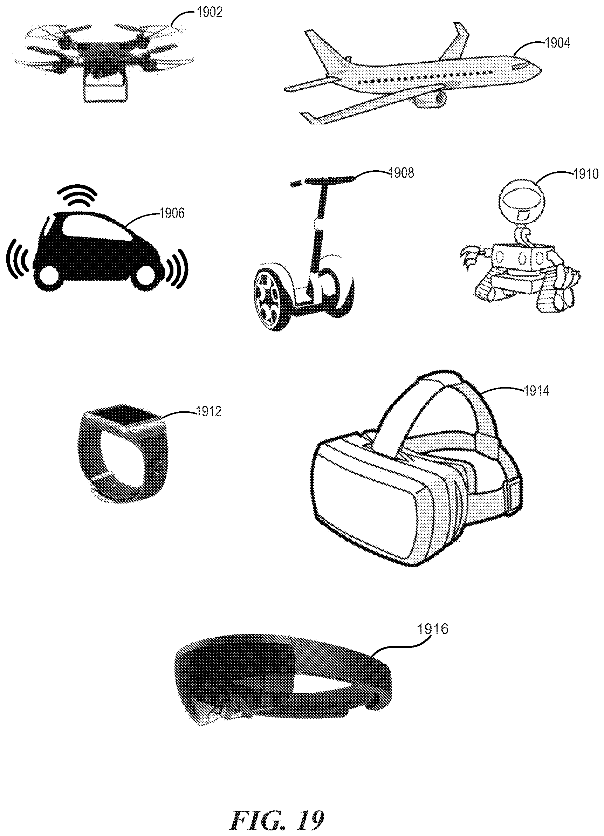

Figure 19 illustrates examples of mobile platforms configured in accordance with various embodiments of the presently disclosed technology. As illustrated, a representative mobile platform as disclosed herein may include at least one of an unmanned aerial vehicle (UAV) 1902, a manned aircraft 1904, an autonomous vehicle 1906, a self-balancing vehicle 808, a terrestrial robot 1910, a smart wearable device 1912, a virtual reality (VR) head-mounted display 1914, or an augmented reality (AR) head-mounted display 1916.

From the foregoing, it will be appreciated that specific embodiments of the present technology have been described herein for purposes of illustration, but that various modification may be made without deviating from the technology. For example, the components described herein can have suitable shapes and/or dimensions that deviate from those expressly shown in the figures, while still providing one or more of the associated benefits described above. In a particular example, while the openings in the optical elements are shown in the Figures as circular, in other embodiments, the openings can have other shapes, as can the corresponding shafts. In general, the associated bearings will still have radial symmetry so as to allow for rotation.

Certain aspects of the technology described in the context of particular embodiments may be combined or eliminated in other embodiments. For example, embodiments showing two optical elements may, in at least some representative examples, include one optical element, or more than two optical elements. Further, while advantages associated with certain embodiments of the technology have been described in the context of those embodiments, other embodiments may also exhibit such advantages, and not all embodiments need necessarily exhibit such advantages to fall within the scope of the present technology. Accordingly, the present disclosure and associated technology can encompass other embodiments not expressly shown or described herein.

## Claims

1. A LiDAR system, comprising:
a laser transceiver including a laser emitter (301a) and a laser receiver (302a), the laser emitter being positioned to emit laser light along an optical path (518, 618, 1872);
a collimating element (570, 670, 770, 870, 1370) positioned along the optical path (518, 618, 1872); and
an optical system, wherein the optical system comprises:
- at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) positioned along the optical path (518, 618, 1872) to receive the emitted laser light, the optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) having an opening (422, 432, 522, 532, 622, 632, 722, 732, 922, 932 1022, 1032) therethrough;
- a shaft (460, 860, 960, 1060, 1160, 1260, 1360, 1760) extending into the opening (422, 432, 522, 532, 622, 632, 722, 732, 922, 932 1022, 1032); and
- a bearing (450, 850, 850b, 950, 1050, 1150, 1250, 1750) positioned to rotatably support the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) relative to the shaft (460, 860, 960, 1060, 1160, 1260, 1360, 1760);
wherein the collimating element (570) carries a light extinction material (571),
wherein the collimating element (570) has a corresponding focal plane (619, 819, 1819) and an optical axis (272) orthogonal to the focal plane (519, 619, 719, 819) and wherein the light extinction material (571) is centered on the optical axis (272).

2. The LiDAR system of claim 1, wherein the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) includes a refractive element having opposing, non-parallel surfaces.

3. The LiDAR system of any of the claims 1 or 2, wherein the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) includes a first prism and a second prism, and wherein the opening (422, 432, 522, 532, 622, 632, 722, 732, 922, 932 1022, 1032) incudes a first opening (422) extending through the first prism and a second opening (432) extending through the second prism.

4. The LiDAR system of any of the claims 1 to 3, further comprising at least one motor coupled to the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) to rotate the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) relative to the laser transceiver.

5. The LiDAR system of claim 4,
wherein the at least one motor includes a first motor coupled to a first optical element (120, 420, 520, 620, 720, 820a, 820b, 820c, 920, 1020, 1220, 1320, 1720) to drive the first optical element (120, 420, 520, 620, 720, 820a, 820b, 820c, 920, 1020, 1220, 1320, 1720) at a first rate, and a second motor coupled to a second optical element (130, 430, 530, 630, 730, 830a, 830b, 830c, 930, 1030, 1230, 1330, 1730) to drive the second optical element (130, 430, 530, 630, 730, 830a, 830b, 830c, 930, 1030, 1230, 1330, 1730) at a second rate different than the first rate,
or
wherein the at least one motor includes a first motor coupled to a first optical element (120, 420, 520, 620, 720, 820a, 820b, 820c, 920, 1020, 1220, 1320, 1720) to drive the first optical element (120, 420, 520, 620, 720, 820a, 820b, 820c, 920, 1020, 1220, 1320, 1720) in a first direction (213), and a second motor coupled to a second optical element (130, 430, 530, 630, 730, 830a, 830b, 830c, 930, 1030, 1230, 1330, 1730) to drive the second optical element (130, 430, 530, 630, 730, 830a, 830b, 830c, 930, 1030, 1230, 1330, 1730) in a second direction (214) opposite the first direction (213),
or
wherein the at least one motor includes a rotor (982, 1082, 1182, 1282) and a stator (981, 1081, 1181, 1281), each of which is positioned outwardly around the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730).

6. The LiDAR system of any of the claims 1 to 5, wherein the bearing (450, 850, 850b, 950, 1050, 1150, 1250, 1750) is positioned in the opening (422, 432, 522, 532, 622, 632, 722, 732, 922, 932 1022, 1032), and is one of multiple bearings (450, 850, 850b, 950, 1050, 1150, 1250, 1750) positioned in the opening (422, 432, 522, 532, 622, 632, 722, 732, 922, 932 1022, 1032), between the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) and the shaft (460, 860, 960, 1060, 1160, 1260, 1360, 1760), to rotatably support the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) relative to the shaft (460, 860, 960, 1060, 1160, 1260, 1360, 1760).

7. The LiDAR system of any of the claims 1 to 6, wherein the shaft (460, 860, 960, 1060, 1160, 1260, 1360, 1760) is positioned along a shaft axis (461, 561, 661, 761, 861, 1761), and wherein the laser emitter is positioned to emit laser light along the shaft axis (461, 561, 661, 761, 861, 1761), or
wherein the shaft (460, 860, 960, 1060, 1160, 1260, 1360, 1760) is positioned along a shaft axis (461, 561, 661, 761, 861, 1761), and wherein the laser emitter is positioned to emit laser light at a non-zero angle relative to the shaft axis (461, 561, 661, 761, 861, 1761).

8. The LiDAR system of any of the claims 1 to 7, wherein the laser emitter is positioned to emit laser light at an orthogonal angle or at a non-orthogonal angle relative to the focal plane (519, 619, 719, 819).

9. The LiDAR system of claim 8, wherein the laser emitter is positioned to emit laser light at a non-orthogonal angle relative to the focal plane (519, 619, 719, 819) and wherein the laser emitter is positioned along the shaft axis (461, 561, 661, 761, 861, 1761).

10. The LiDAR system of any of the claims 1 9,
wherein the laser emitter is positioned to emit laser light off-center from the optical axis (272),
or
wherein the shaft (460, 860, 960, 1060, 1160, 1260, 1360, 1760) is positioned along a shaft axis (461, 561, 661, 761, 861, 1761), and the laser emitter is positioned to emit laser light along a portion of the optical path (518, 618, 1872) off-center from the shaft axis (461, 561, 661, 761, 861, 1761),
or wherein the shaft (460, 860, 960, 1060, 1160, 1260, 1360, 1760) is positioned along a shaft axis (461, 561, 661, 761, 861, 1761) that is oriented at a non-zero angle relative to the optical axis (272).

11. The LiDAR system of any of the claims 1 to 10, further comprising a first mirror (310a) positioned to direct outgoing emitted light from the emitter (301) to the collimating element (570, 670, 770, 870, 1370), and a second mirror (310b) positioned to reflect incoming reflected light to the receiver (202, 302).

12. A method for operating a LiDAR system according to one of the claims 1 to 11, comprising:
rotatably supporting the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730), having the opening (422, 432, 522, 532, 622, 632, 722, 732, 922, 932 1022, 1032) therethrough, in position along the optical path (518, 618, 1872), via:
the shaft (460, 860, 960, 1060, 1160, 1260, 1360, 1760) extending into the opening (422, 432, 522, 532, 622, 632, 722, 732, 922, 932 1022, 1032); and
the bearing (450, 850, 850b, 950, 1050, 1150, 1250, 1750) operably coupled between the at least one optical element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) and the shaft (460, 860, 960, 1060, 1160, 1260, 1360, 1760).

## Patentansprüche

1. LiDAR-System, das Folgendes umfasst:
einen Lasersendeempfänger, der einen Laseremitter (301a) und einen Laserempfänger (302a) beinhaltet, wobei der Laseremitter positioniert ist, um Laserlicht entlang eines optischen Pfades (518, 618, 1872) zu emittieren;
ein Kollimationselement (570, 670, 770, 870, 1370), das entlang des optischen Pfades (518, 618, 1872) angeordnet ist; und
ein optisches System, wobei das optische System Folgendes umfasst:
- mindestens ein optisches Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730), das entlang des optischen Pfades (518, 618, 1872) positioniert ist, um das emittierte Laserlicht zu empfangen, wobei das optische Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) eine Öffnung (422, 432, 522, 532, 622, 632, 722, 732, 922, 932 1022, 1032) dadurch aufweist;
- eine Welle (460, 860, 960, 1060, 1160, 1260, 1360, 1760), die sich in die Öffnung (422, 432, 522, 532, 622, 632, 722, 732, 922, 932 1022, 1032) erstreckt; und
- ein Lager (450, 850, 850b, 950, 1050, 1150, 1250, 1750), das positioniert ist, um das mindestens eine optische Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) relativ zur Welle (460, 860, 960, 1060, 1160, 1260, 1360, 1760) drehbar zu stützen;
wobei das Kollimationselement (570) ein Lichtextinktionsmaterial (571) enthält, wobei das Kollimationselement (570) eine entsprechende Fokalebene (619, 819, 1819) und eine optische Achse (272) orthogonal zur Fokalebene (519, 619, 719, 819) aufweist und wobei das Lichtextinktionsmaterial (571) auf der optischen Achse (272) zentriert ist.

2. LiDAR-System nach Anspruch 1, wobei das mindestens eine optische Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) ein refraktives Element mit gegenüberliegenden, nicht parallelen Flächen beinhaltet.

3. LiDAR-System nach einem der Ansprüche 1 oder 2, wobei das mindestens eine optische Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) ein erstes Prisma und ein zweites Prisma beinhaltet und wobei die Öffnung (422, 432, 522, 532, 622, 632, 722, 732, 922, 932 1022, 1032) eine erste Öffnung (422), die sich durch das erste Prisma erstreckt, und eine zweite Öffnung (432), die sich durch das zweite Prisma erstreckt, beinhaltet.

4. LiDAR-System nach einem der Ansprüche 1 bis 3, das ferner mindestens einen Motor umfasst, der an das mindestens eine optische Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) gekoppelt ist, um das mindestens eine optische Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) relativ zum Lasersendeempfänger zu drehen.

5. LiDAR-System nach Anspruch 4, wobei der mindestens eine Motor einen ersten Motor, der an das erste optische Element (120, 420, 520, 620, 720, 820a, 820b, 820c, 920, 1020, 1220, 1320, 1720) gekoppelt ist, um das erste optische Element (120, 420, 520, 620, 720, 820a, 820b, 820c, 920, 1020, 1220, 1320, 1720) mit einer ersten Rate anzutreiben, sowie einen zweiten Motor beinhaltet, der an das zweite optische Element (130, 430, 530, 630, 730, 830a, 830b, 830c, 930, 1030, 1230, 1330, 1730) gekoppelt ist, um das zweite optische Element (130, 430, 530, 630, 730, 830a, 830b, 830c, 930, 1030, 1230, 1330, 1730) mit einer zweiten Rate anzutreiben, die sich von der ersten Rate unterscheidet,
oder
wobei der mindestens eine Motor einen ersten Motor, der an das erste optische Element (120, 420, 520, 620, 720, 820a, 820b, 820c, 920, 1020, 1220, 1320, 1720) gekoppelt ist, um das erste optische Element (120, 420, 520, 620, 720, 820a, 820b, 820c, 920, 1020, 1220, 1320, 1720) in eine erste Richtung (213) anzutreiben, sowie einen zweiten Motor beinhaltet, der an das zweite optische Element (130, 430, 530, 630, 730, 830a, 830b, 830c, 930, 1030, 1230, 1330, 1730) gekoppelt ist, um das zweite optische Element (130, 430, 530, 630, 730, 830a, 830b, 830c, 930, 1030, 1230, 1330, 1730) in eine zweite Richtung (214) anzutreiben, die der ersten Richtung (213) entgegengesetzt ist,
oder
wobei der mindestens eine Motor einen Rotor (982, 1082, 1182, 1282) und einen Stator (981, 1081, 1181, 1281) beinhaltet, von denen jeder um das mindestens eine optische Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) nach außen positioniert ist.

6. LiDAR-System nach einem der Ansprüche 1 bis 5, wobei das Lager (450, 850, 850b, 950, 1050, 1150, 1250, 1750) in der Öffnung (422, 432, 522, 532, 622, 632, 722, 732, 922, 932 1022, 1032) positioniert ist und eines von mehreren Lagern (450, 850, 850b, 950, 1050, 1150, 1250, 1750) ist, die in der Öffnung (422, 432, 522, 532, 622, 632, 722, 732, 922, 932 1022, 1032) zwischen dem mindestens einen optischen Element (120, 130, 420, 430, 520, 530, 620, 630, 720, 730, 820a, 820b, 820c, 830a, 830b, 830c 920, 930, 1020, 1030, 1220, 1230, 1320, 1330, 1720, 1730) und der Welle (460, 860, 960, 1060, 1160, 1260, 1360, 1760) positioniert sind, um das mindestens eine optische Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) relativ zur Welle (460, 860, 960, 1060, 1160, 1260, 1360, 1760) drehbar zu stützen.

7. LiDAR-System nach einem der Ansprüche 1 bis 6, wobei die Welle (460, 860, 960, 1060, 1160, 1260, 1360, 1760) entlang der Wellenachse (461, 561, 661, 761, 861, 1761) positioniert ist und wobei der Laseremitter positioniert ist, um Laserlicht entlang der Wellenachse (461, 561, 661, 761, 861, 1761) zu emittieren,
oder
wobei die Welle (460, 860, 960, 1060, 1160, 1260, 1360, 1760) entlang der Wellenachse (461, 561, 661, 761, 861, 1761) positioniert ist und wobei der Laseremitter positioniert ist, um Laserlicht relativ zur Wellenachse (461, 561, 661, 761, 861, 1761) in einem Winkel von nicht null zu emittieren.

8. LiDAR-System nach einem der Ansprüche 1 bis 7, wobei der Laseremitter positioniert ist, um Laserlicht relativ zur Fokalebene (519, 619, 719, 819) n einem rechten Winkel oder einem nicht rechten Winkel zu emittieren.

9. LiDAR-System nach Anspruch 8, wobei der Laseremitter positioniert ist, um Laserlicht relativ zur Fokalebene (519, 619, 719, 819)) in einem nicht rechten Winkel zu emittieren, und wobei der Laseremitter entlang der Wellenachse (461, 561, 661, 761, 861, 1761) positioniert ist.

10. LiDAR-System nach einem der Ansprüche 1 bis 9, wobei der Laseremitter positioniert ist, um Laserlicht außerhalb des Zentrums der optischen Achse (272) zu emittieren,
oder
wobei die Welle (460, 860, 960, 1060, 1160, 1260, 1360, 1760) entlang der Wellenachse (461, 561, 661, 761, 861, 1761) positioniert ist und der Laseremitter positioniert ist, um Laserlicht entlang eines Abschnitts des optischen Pfades (518, 618, 1872) außerhalb des Zentrums der Wellenachse (461, 561, 661, 761, 861, 1761) zu emittieren,
wobei die Welle (460, 860, 960, 1060, 1160, 1260, 1360, 1760) entlang einer Wellenachse (461, 561, 661, 761, 861, 1761) positioniert ist, die relativ zur optischen Achse (272) in einem Winkel von nicht null ausgerichtet ist.

11. LiDAR-System nach einem der Ansprüche 1 bis 10, das ferner einen ersten Spiegel (310a), der positioniert ist, um abgehendes emittiertes Licht vom Emitter (301) zum Kollimationselement (570, 670, 770, 870, 1370) zu leiten, sowie einen zweiten Spiegel (310b) umfasst, der positioniert ist, um ankommendes reflektiertes Licht zum Empfänger (202, 302) zu reflektieren.

12. Verfahren zum Betreiben eines LiDAR-Systems gemäß einem der Ansprüche 1 bis 11, das Folgendes umfasst:
drehbares Stützen des mindestens einen optischen Elements (120, 130, 420, 430, 520, 530, 620, 630, 720, 730, 820a, 820b, 820c, 830a, 830b, 830c, 920, 930,, 1020, 1030, 1220, 1230, 1320, 1330, 1720, 1730), das die Öffnung (422, 432, 522, 532, 622, 632, 722, 732, 922, 932, 1022, 1032) dadurch aufweist, in Position entlang des optischen Pfades (518, 618, 1872), via:
die Welle (460, 860, 960, 1060, 1160, 1260, 1360, 1760), die sich in die Öffnung (422, 432, 522, 532, 622, 632, 722, 732, 922, 932 1022, 1032) erstreckt; und
das Lager (450, 850, 850b, 950, 1050, 1150, 1250, 1750), das zwischen dem mindestens einen optischen Element (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) und der Welle (460, 860, 960, 1060, 1160, 1260, 1360, 1760) wirkgekoppelt ist.

## Revendications

1. Un système LiDAR, comprenant :
un émetteur-récepteur laser comprenant un émetteur laser (301a) et un récepteur laser (302a), l'émetteur laser étant positionné pour émettre une lumière laser le long d'un trajet optique (518, 618, 1872) ;
un élément de collimation (570, 670, 770, 870, 1370) positionné le long du trajet optique (518, 618, 1872) ; et
un système optique, lequel système optique comprend :
- au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) positionné le long du trajet optique (518, 618, 1872) pour recevoir la lumière laser émise, ledit élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) ayant une ouverture (422, 432, 522, 532, 622, 632, 722, 732, 922, 932, 1022, 1032) à travers celui-ci ;
- un arbre (460, 860, 960, 1060, 1160, 1260, 1360, 1760) s'étendant dans l'ouverture (422, 432, 522, 532, 622, 632, 722, 732, 922, 932, 1022, 1032) ; et
- un palier (450, 850, 850b, 950, 1050, 1150, 1250, 1750) positionné pour supporter en rotation ledit au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) par rapport à l'arbre (460, 860, 960, 1060, 1160, 1260, 1360, 1760) ;
lequel élément de collimation (570) porte un matériau d'extinction de lumière (571),
lequel élément de collimation (570) a un plan focal correspondant (619, 819, 1819) et un axe optique (272) orthogonal au plan focal (519, 619, 719, 819) et lequel matériau d'extinction de lumière (571) est centré sur l'axe optique (272).

2. Le système LiDAR selon la revendication 1, dans lequel ledit au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) comprend un élément réfractif ayant des surfaces opposées non parallèles.

3. Le système LiDAR selon l'une quelconque des revendications 1 ou 2,
dans lequel ledit au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) comprend un premier prisme et un second prisme, et dans lequel l'ouverture (422, 432, 522, 532, 622, 632, 722, 732, 922, 932, 1022, 1032) comprend une première ouverture (422) s'étendant à travers le premier prisme et une seconde ouverture (432) s'étendant à travers le second prisme.

4. Le système LiDAR selon l'une quelconque des revendications 1 à 3, comprenant en outre au moins un moteur couplé audit au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) pour faire tourner ledit au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) par rapport à l'émetteur-récepteur laser.

5. Le système LiDAR selon la revendication 4,
dans lequel ledit au moins un moteur comprend un premier moteur couplé à un premier élément optique (120, 420, 520, 620, 720, 820a, 820b, 820c, 920, 1020, 1220, 1320, 1720) pour entraîner ledit premier élément optique (120, 420, 520, 620, 720, 820a, 820b, 820c, 920, 1020, 1220, 1320, 1720) à une première vitesse, et un second moteur couplé à un second élément optique (130, 430, 530, 630, 730, 830a, 830b, 830c, 930, 1030, 1230, 1330, 1730) pour entraîner ledit second élément optique (130, 430, 530, 630, 730, 830a, 830b, 830c, 930, 1030, 1230, 1330, 1730) à une seconde vitesse différente de la première vitesse,
ou
dans lequel ledit au moins un moteur comprend un premier moteur couplé à un premier élément optique (120, 420, 520, 620, 720, 820a, 820b, 820c, 920, 1020, 1220, 1320, 1720) pour entraîner ledit premier élément optique (120, 420, 520, 620, 720, 820a, 820b, 820c, 920, 1020, 1220, 1320, 1720) dans une première direction (213), et un second moteur couplé à un second élément optique (130, 430, 530, 630, 730, 830a, 830b, 830c, 930, 1030, 1230, 1330, 1730) pour entraîner ledit second élément optique (130, 430, 530, 630, 730, 830a, 830b, 830c, 930, 1030, 1230, 1330, 1730) dans une seconde direction (214) opposée à la première direction (213),
ou
dans lequel ledit au moins un moteur comprend un rotor (982, 1082, 1182, 1282) et un stator (981, 1081, 1181, 1281), chacun desquels est positionné vers l'extérieur autour dudit au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730).

6. Le système LiDAR selon l'une quelconque des revendications 1 à 5, dans lequel le palier
(450, 850, 850b, 950, 1050, 1150, 1250, 1750) est positionné dans l'ouverture (422, 432, 522, 532, 622, 632, 722, 732, 922, 932, 1022, 1032), et est l'un de plusieurs paliers (450, 850, 850b, 950, 1050, 1150, 1250, 1750) positionnés dans l'ouverture (422, 432, 522, 532, 622, 632, 722, 732, 922, 932, 1022, 1032), entre ledit au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) et l'arbre (460, 860, 960, 1060, 1160, 1260, 1360, 1760), pour supporter en rotation ledit au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730) par rapport à l'arbre (460, 860, 960, 1060, 1160, 1260, 1360, 1760).

7. Le système LiDAR selon l'une quelconque des revendications 1 à 6, dans lequel l'arbre (460, 860, 960, 1060, 1160, 1260, 1360, 1760) est positionné le long d'un axe d'arbre (461, 561, 661, 761, 861, 1761), et dans lequel l'émetteur laser est positionné pour émettre une lumière laser le long de l'axe d'arbre (461, 561, 661, 761, 861, 1761),
ou
dans lequel l'arbre (460, 860, 960, 1060, 1160, 1260, 1360, 1760) est positionné le long d'un axe d'arbre (461, 561, 661, 761, 861, 1761), et dans lequel l'émetteur laser est positionné pour émettre une lumière laser selon un angle non nul par rapport à l'axe d'arbre (461, 561, 661, 761, 861, 1761).

8. Le système LiDAR selon l'une quelconque des revendications 1 à 7,
dans lequel l'émetteur laser est positionné pour émettre une lumière laser selon un angle orthogonal ou selon un angle non orthogonal par rapport au plan focal (519, 619, 719, 819).

9. Le système LiDAR selon la revendication 8,
dans lequel l'émetteur laser est positionné pour
émettre une lumière laser selon un angle non orthogonal par rapport au plan focal (519, 619, 719, 819) et dans lequel l'émetteur laser est positionné le long de l'axe d'arbre (461, 561, 661, 761, 861, 1761).

10. Le système LiDAR selon l'une quelconque des revendications 1 à 9,
dans lequel l'émetteur laser est positionné pour émettre une lumière laser hors centre de l'axe optique (272),
ou
dans lequel l'arbre (460, 860, 960, 1060, 1160, 1260, 1360, 1760) est positionné le long d'un axe d'arbre (461, 561, 661, 761, 861, 1761), et l'émetteur laser est positionné pour émettre une lumière laser le long d'une portion du trajet optique (518, 618, 1872) hors centre de l'axe d'arbre (461, 561, 661, 761, 861, 1761),
ou
dans lequel l'arbre (460, 860, 960, 1060, 1160, 1260, 1360, 1760) est positionné le long d'un axe d'arbre (461, 561, 661, 761, 861, 1761) qui est orienté selon un angle non nul par rapport à l'axe optique (272).

11. Le système LiDAR selon l'une quelconque des revendications 1 à 10, comprenant en outre un premier miroir (310a) positionné pour diriger la lumière émise sortante de l'émetteur (301) vers l'élément de collimation (570, 670, 770, 870, 1370), et un second miroir (310b) positionné pour réfléchir la lumière réfléchie entrante vers le récepteur (202, 302).

12. Un procédé de fonctionnement d'un système LiDAR selon l'une quelconque des revendications 1 à 11, comprenant :
supporter en rotation ledit au moins un élément optique (120, 130, 420, 430, 520, 530, 620, 630, 720, 730, 820a, 820b, 820c, 830a, 830b, 830c, 920, 930, 1020, 1030, 1220, 1230, 1320, 1330, 1720, 1730), ayant l'ouverture (422, 432, 522, 532, 622, 632, 722, 732, 922, 932, 1022, 1032) à travers celui-ci, en position le long du trajet optique (518, 618, 1872), via :
l'arbre (460, 860, 960, 1060, 1160, 1260, 1360, 1760) s'étendant dans l'ouverture (422, 432, 522, 532, 622, 632, 722, 732, 922, 932, 1022, 1032) ; et
le palier (450, 850, 850b, 950, 1050, 1150, 1250, 1750) couplé de manière fonctionnelle entre ledit au moins un élément optique (120, 130, 420, 430, 520, 530, 620, 630, 720, 730, 820a, 820b, 820c, 830a, 830b,
830c, 920, 930, 1020, 1030, 1220, 1230, 1320, 1330, 1720, 1730) et l'arbre (460, 860, 960, 1060, 1160, 1260, 1360, 1760).
